# EUROPÄISCHE PATENTSCHRIFT

(11) **EP 1 541 949 B1**
(45) Veröffentlichungstag und Bekanntmachung des Hinweises auf die Patenterteilung: **17.04.2019**
(21) Anmeldenummer: 04028750.0
(22) Anmeldetag: 03.12.2004
(51) Int. Cl.: F25D 29/00

(54) **Verfahren zur Lagerung von tiefgefrorener Ware**
Method for storing deep frozen articles
Procédé de stockage de produits surgelés

(30) Priorität: 10.12.2003 DE 10357778; 19.07.2004 DE 102004034869
(43) Veröffentlichungstag der Anmeldung: 15.06.2005
(73) Patentinhaber: Liebherr-Hausgeräte Ochsenhausen GmbH, 88416 Ochsenhausen (DE)
(72) Erfinder: King, Wilfried, 88416 Ochsenhausen (DE); Wiest, Matthias, 88416 Ochsenhausen (DE); Bauer, Helmut, 9900 Lienz (AT); Ertel, Thomas, 88299 Leutkich (DE)
(74) Vertreter: Laufhütte, Dieter

(56) Entgegenhaltungen:
- EP-A1- 1 398 584
- EP-A2- 0 710 807

## Beschreibung

Die Erfindung betrifft ein Verfahren zur Lagerung von tiefgefrorener Ware in einem Gefriergerät mit drehzahlgeregeltem Kompressor.

In Haushalts-Gefriergeräten werden die Waren üblicherweise bei einer Temperatur von ca. -18° C oder geringfügig geringeren Temperaturen gelagert. Dieser Temperaturwert ist die Temperatur, die am wärmsten Ort im Gefriergerät im Kern der dort lagernden Ware gemessen werden kann. Üblicherweise weist der Kompressor eine Ein/Aus-Regelung auf, die mittels Temperatursensoren angesteuert wird, die die Innentemperatur des Gefrierraums erfassen. Diese Ein/Aus-Regelung führt zu Temperaturschwankungen innerhalb der Waren und insbesondere an deren Oberflächen. Auch bei der Anwendung von drehzahlgeregelten Kompressoren wird die Ein/Aus-Regelung angewendet. Zwar wird vor einem Ausschalten des Kompressors dieser auf die niederst mögliche Drehzahl zurückgefahren, aber ein Ausschalten des Kompressors wird dadurch nicht unterbunden. Grund hierfür ist, dass das in der Praxis herstellbare Verhältnis von höchster zu niedrigster Drehzahl zu tief liegt, um einerseits bei -18° C einen Dauerbetrieb zu erreichen und andererseits bei Vorliegen der höchstzulässigen Umgebungstemperatur einen ausreichende Kälteleistung sicherzustellen. Hier müsste das herstellbare Verhältnis von höchster zu niedrigster Drehzahl des Kompressors wesentlich größer sein. Dies ist maschinentechnisch nicht realisierbar.

Um auch für hohe Umgebungstemperatur noch genügend Leistungsreserve zu besitzen, ist es notwendig, den Kompressor entsprechend groß zu dimensionieren. Man ist dadurch gezwungen, eine Ein/Aus-Regelung bei normalen Umgebungstemperaturen anzuwenden, um eine Gefrierraumtemperatur von -18° C zu erhalten. Diese Ein/Aus-Regelung führt bei konventionellen Kompressoren zu einer Schaltspielzahl von z. B. 3/h bzw. bei der Verwendung von drehzahlgeregelten Kompressoren von 1/h. Durch diese Ein/Ausschaltvorgänge ist die tiefgefrorene Ware Temperaturschwankungen ausgesetzt, worunter die Qualität der tiefgefrorenen Ware leidet.

Das Dokument EP 0 710 807 A2 offenbart ein Verfahren gemäß dem Oberbegriff des Anspruchs 1.

Aufgabe der vorliegenden Erfindung ist es, ein Verfahren zur Lagerung von tiefgefrorener Ware in einem Gefriergerät nach dem Oberbegriff des Anspruchs 1 derart weiterzubilden, dass die Qualität der tiefgefrorenen Ware bei gleicher Lagerdauer verbessert und die mögliche Lagerdauer merklich verlängert wird.

Erfindungsgemäß wird die Aufgabe durch ein Verfahren mit den Merkmalen des Anspruchs 1 gelöst.

Dieses erfindungsgemäße Verfahren basiert auf folgenden Erkenntnissen:
Bei Temperaturschwankungen wird die Bildung von großen Eiskristallen in der tiefgefrorenen Ware beschleunigt. Dies hängt damit zusammen, dass kleine Eiskristalle einen höheren Dampfdruck als große Eiskristalle haben. Aufgrund des Dampfdruckgefälles zwischen kleinen und großen Eiskristallen können die großen Kristalle auf Kosten der kleinen Kristalle wachsen. Diese großen Kristalle führen z. B. bei tiefgefrorenem Speiseeis zu einer sensorischen Verschlechterung der Qualität. Die cremige Konsistenz (kleine Eiskristalle) wird zunehmend sandig (große Eiskristalle) empfunden. Dieser Vorgang wird durch Temperaturunterschiede zwischen den Kristallen erheblich beschleunigt. Maßgeblich für den Ablauf der Rekristallisation ist die Höhe der Temperaturschwankung und die Häufigkeit derselben pro Zeiteinheit. Diese Erkenntnis macht sich die Erfindung zu Nutze, indem sie die Temperaturschwankungen, die durch das Ein- und Ausschalten des Kompressors bedingt sind, vermeidet. Um dies zu erreichen, wird die Temperatur wesentlich weiter als die bislang üblichen -18° C abgesenkt. Dies führt zusätzlich dazu, dass bei eventuell doch vorhandenen minimalen Temperaturschwankungen die treibende Dampfdruckdifferenz zusätzlich verkleinert wird. Es gilt nämlich, dass die treibende Dampfdruckdifferenz bei gleicher Temperaturschwankung abnimmt, wenn das Temperaturniveau gesenkt wird.

Weiterhin wird durch die weitgehende Vermeidung der Temperaturschwankungen die Bildung von sogenanntem Gefrierbrand im entsprechenden gefrorenen Gut bei nicht am Gut anliegender Verpackung vermieden. Auch die sich am Innern der Oberfläche der Verpackung bildende Reifschicht wird vermieden. Dieser Gefrierbrand entsteht üblicherweise durch Wasserverlust durch Atmung. Dabei ist zu berücksichtigen, dass für den Fall, dass die Temperatur in einem Gefriergerät absinkt, bei einer verpackten Ware die Temperatur des Verpackungsmaterials zunächst tiefer liegt als die der verpackten Ware. Zeitlich versetzt nimmt die Ware ebenfalls die Temperatur der Verpackung bzw. der Umgebung an. Aufgrund der über einen bestimmten Zeitraum herrschenden höheren Temperatur ist auch für einen gewissen Zeitraum der Wasserdampfdruck über der Ware höher als über der Verpackungsinnenseite. Es tritt daher Wasserdampf aus der Ware aus und kondensiert an den inneren Oberflächen der Verpackung, gleichzeitig wird im Inneren der Ware eine Umkristallisation eingeleitet, das heißt kleine Eiskristalle verschwinden und große werden gebildet.

Bei der Umkehrung der Temperaturschwankung, das heißt wenn die Temperatur in der Umgebung der Ware wieder ansteigt, hinkt die Warentemperatur wieder nach. In dieser Phase ist das Innere der Ware das kältere System. Eine Rückdiffusion des Wasserdampfes ist jedoch nicht möglich. Der Wasserdampf schlägt sich in Form von Eis an der Oberfläche des Gutes nieder.

Bei erneuter Temperaturabsenkung in der Umgebung der Ware erfolgt wiederum eine Diffusion von Wasserdampf aus dem Inneren der Ware nach außen. Bei einer Vielzahl derartiger Wechselspiele im Temperaturverlauf werden die äußeren Zonen der Ware praktisch eisfrei - es bildet sich Gefrierbrand, das heißt Austrocknung, Farbverlust und Verlust flüchtiger Stoffe, aus. An der inneren Oberfläche der Verpackung bildet sich eine Reifschicht. An Stellen, an denen die Verpackung dicht anliegt, kann kein Wasserdampf aus der Ware austreten. Hier bilden sich in Randzonen große Eiskristalle aus.

Diese vorgenannten Nachteile werden durch das erfindungsgemäße Verfahren ebenfalls unterdrückt, da die Temperatur konstant gehalten werden kann und die Temperaturwechselspiele, die zum Austrocknen führen können, wirksam unterbunden werden.

Schließlich macht sich die Erfindung die sogenannte van' t Hoff Regel zu eigen. Diese besagt, dass sich die Reaktionsgeschwindigkeit bei einer Temperaturerhöhung um 10 K mehr als verdoppelt. Überträgt man dies auf den Gefrierbereich, bedeutet dies, dass durch die Absenkung der Temperatur einer Ware um 10 K eine Verlängerung der Lagerdauer um den Faktor zwei erzielt wird. Gültigkeit hat diese Aussage für den Temperaturbereich von kleiner als -20° C. Die Lagerdauer kann also durch eine entsprechende Absenkung des Temperaturniveaus auf eine wesentlich kältere Temperatur als -18° C verbessert werden. Bei einer Temperaturabsenkung auf -28° C kann man davon ausgehen, dass sich die Lagerdauer je nach Produkt verdoppeln kann, wobei bei gleicher Lagerdauer die Qualitätserhaltung entsprechend höher ist.

Weitere vorteilhafte Ausgestaltungen der Erfindung ergeben sich aus den sich an den Hauptanspruch anschließenden Unteransprüchen. Demnach kann die Temperatur im Tieftemperaturmodus vorteilhaft mindestens -28° C sein.

Bei einem Kühlgerät kann vorteilhaft ein Tieftemperaturmodus zur Lagerung bei Temperaturen von mindestens -28° C mittels eines Betätigungsmittels, beispielsweise eines Schalters, gewählt werden.

Vorteilhaft kann der Kompressor bei gewählten Tieftemperaturmodus durch eine Steuerungslogik im Dauerbetrieb immer bei der kleinst möglichen Drehzahl betrieben werden. Wenn der Kompressor einen Leistungsüberschuss aufweist wird über eine entsprechende Steuerungslogik trotzdem festgelegt, dass der Kompressor bei seiner kleinstmöglichen Drehzahl kontinuierlich durchläuft, auch wenn sich eine Temperatur unter der gewählten Tieftemperatur einstellt. Es stellt sich hier dann eine konstante Temperatur unterhalb der gewählten Tieftemperatur ein. Wesentlich ist hier, dass die Tieftemperatur konstant beibehalten wird und keine Temperaturschwankungen auftreten. Diese angesprochene Bedingung wird sich insbesondere im Winter einstellen, wenn die Umgebungstemperatur des Gerätes geringer ist als die Umgebungstemperatur im Sommer. Ein Einpegeln auf eine tiefere Temperatur als die gewählte Tieftemperatur beeinfluss die Qualität des tiefgefrorenen Gutes nicht, so dass ein Einpegeln auf diese niedrigere Temperatur akzeptiert werden kann.

Gemäß einer weiteren vorteilhaften Ausgestaltung der Erfindung wird über eine entsprechende Steuerungslogik bei Temperaturänderungen die gewählte Tieftemperatur im Gerät selbsttätig wieder eingeregelt. Diese Temperaturänderungen ergeben sich beispielsweise bei Öffnen und Schließen des Gerätes. Die Steuerungslogik erhöht nach einem Wärmeeinfall die Kompressorleistung, damit die gewählte Tieftemperatur möglichst schnell wieder erreicht wird.

Weitere Einzelheiten und Vorteile der Erfindung werden im folgenden an Hand eines Beispiels erläutert:

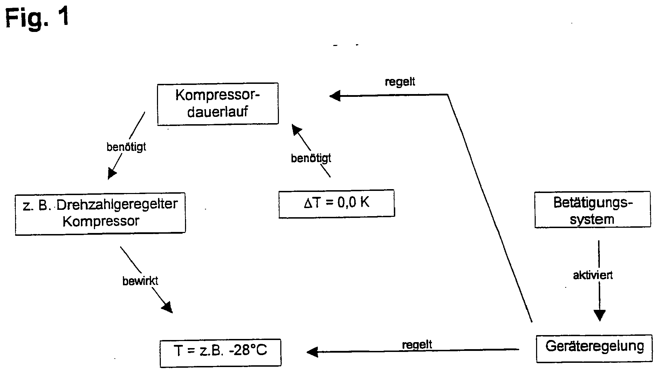

In Figur 1 ist ein Flussdiagramm des optimierten Lagerungssystems dargestellt. Über ein Betätigungssystem kann eine Geräteregelung für das Gefriergerät aktiviert werden. Über die Geräteregelung wird ein Dauerlauf des Kompressors geregelt. Zur Beseitigung der Temperaturdifferenzen wird zum einen der kontinuierliche Lauf des Kompressors benötigt. Zum anderen wird die Drehzahl des Kompressors derart geregelt, dass eine konstante Temperatur bei beispielsweise -28° C eingestellt wird.

Der Einsatz eines drehzahlgeregelten Kompressors, welcher im Dauerlauf betrieben wird, führt zu einer konstanten Temperatur im Innenraum des Gefriergerätes. Die Temperaturregelung hält die Temperatur im Innenraum durch kontinuierlich oder gestuft angepasste Drehzahl konstant. Die zu großen Temperaturschwankungen führende Ein/Aus-Regelung ist entsprechend der Erfindung eliminiert. Möglich wird diese Art der Regelung durch die Absenkung der Temperatur auf z. B. -28° C. Dieses Temperaturniveau erlaubt eine konstante Temperaturhaltung ohne Schwankungen in einem weiten Bereich der Umgebungstemperatur von z. B. 16° C bis 32° C.

Bei einem Betrieb, wie er im Stand der Technik bekannt war bei -18° C, würde beim Dauerlauf des Kompressors in Kauf genommen werden müssen, dass bei höheren Umgebungstemperaturen entsprechende Leistungseinbußen entstehen.

Sollte nun im erfindungsgemäßen System der große Schwankungsbereich zwischen 16° C und 32° C verlassen werden, ergibt sich folgendes:
Sollte die Umgebungstemperatur unter beispielsweise 16° C absinken und ein Ausschalten des Kompressors notwendig werden, um die Innentemperatur nicht unter z. B. -28° C abfallen zu lassen, wird der Kompressor entsprechend der Erfindung auf niedrigster Drehzahlstufe weiterbetrieben. Dies führt zwar zu einer tieferen Innentemperatur, die sich aber unter Berücksichtigung der van't Hoffschen Regel nur positiv auf die Qualität der Waren auswirkt, somit also hinnehmbar ist.

Sollte die Umgebungstemperatur beispielsweise über 32° C ansteigen, so wird die Innentemperatur maximal auf -18° C ansteigen, was einer besseren Lagergüte als bei herkömmlichen Geräten entspricht, da keine kurzfristigen Temperaturschwankungen durch Ein- und Abschalten des Geräts entstehen.

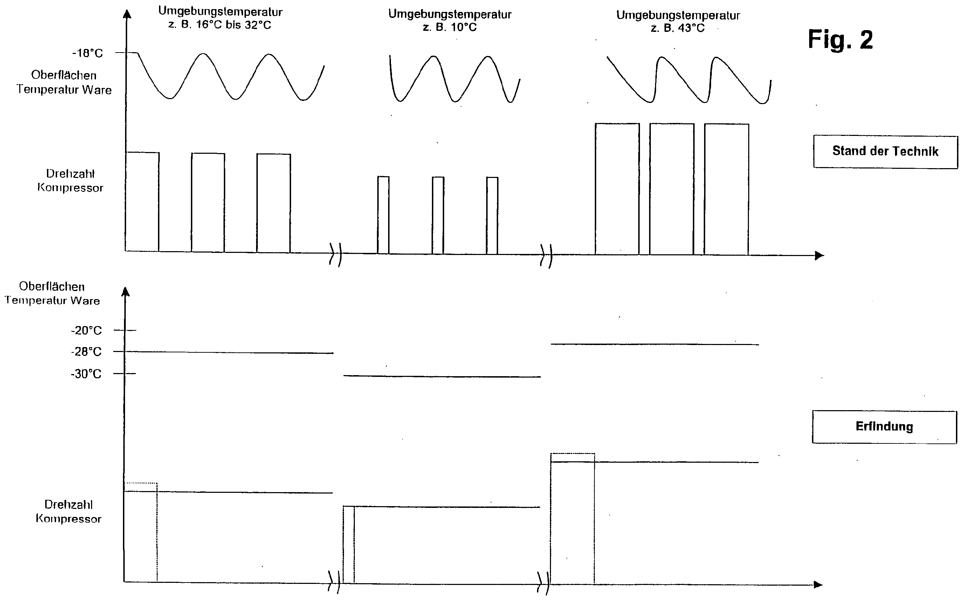

Diese durch starke Änderung der Umgebungstemperatur auftretenden Temperaturänderungen im Innenraum des Gefriergerätes treten allerdings nur sehr selten auf, so allenfalls im Vergleich zwischen Sommer und Winter. Es handelt sich hierbei um eine Temperaturänderung im Innenraum, die nicht die üblichen Temperaturschwankungen des Ein- und Ausschaltens beinhalten, die zu dem zuvor genannten negativen Phänomen des Gefrierbrands bzw. des Umkristallisierens zu größeren Eiskristallen führt. In Übersicht ist diese Situation der Erfindung derjenigen gemäß dem Stand der Technik in Figur 2 gegenüber gestellt. Im oberen Teil der Figur 2 ist nach dem Stand der Technik bei den üblichen Umgebungstemperaturen des Gefriergeräts zwischen beispielsweise 16° C und 32° C die Oberflächentemperatur der gefrorenen Ware in Abhängigkeit von der Drehzahl des Kompressors, also in Abhängigkeit von den Ein- und Auszuständen des Kompressors dargestellt. Hier sind die deutlichen Temperaturschwankungen, die die vorgenannten negativen Folgen haben, dargestellt. Ähnliche Schwankungen ergeben sich bei Verlassen des Temperaturbereichs im linken Teil des Diagramms, wenn die Umgebungstemperatur beispielsweise auf -10° C sinkt. Hier wird der Kompressor jeweils mit geringerer Drehzahl für kürzere Zeiten angesteuert. Dennoch ergibt sich die Temperaturschwankung ähnlich wie im linken Teil des Diagramms. Ganz rechts im oberen Diagramm nach dem Stand der Technik ist die Drehzahl des Kompressors für eine hohe Umgebungstemperatur aufgetragen, die wiederum zu einer starken Temperaturschwankung an der Oberfläche der tiefgefrorenen Ware führt.

Demgegenüber zeigt die Erfindung im unteren Diagramm, wie bei gleichmäßigem Lauf der Kompressordrehzahl für den üblichen Umgebungstemperaturbereich von 16° C bis 32° C eine konstante Tieftemperatur von -28° C eingestellt wird. Sinkt die Umgebungstemperatur auf 10° C ab, so wird das gesamte Temperaturniveau auf beispielsweise auf -30° C erniedrigt, was aber positiv dazu führt, dass die Drehzahl des Kompressors konstant gehalten werden kann. Steigt die Umgebungstemperatur auf den außerordentlich hohen Temperaturbereich von 43° C, so erhöht sich die Drehzahl des Kompressors, während die Tieftemperatur aber weiterhin konstant bleibt. Hierdurch wird beispielsweise immer noch eine Temperatur von ca. -20° C erreicht, die aber wiederum konstant bleibt.

## Patentansprüche

1. Verfahren zur Lagerung von tiefgefrorener Ware in einem Gefriergerät mit drehzahlgeregeltem Kompressor,
**dadurch gekennzeichnet,**
**dass** der Kompressor im Dauerlauf betrieben wird;
**dass** die Temperatur in einem Tieftemperaturmodus auf eine Temperatur abgesenkt wird, die deutlich unter -18° C liegt, und nur mit geringen Temperaturschwankungen, die durch eine Drehzahländerung des Verdichters verursacht werden, im wesentlichen konstant bei einer gewählten Temperatur gehalten wird,
**dadurch gekennzeichnet, dass** dass der Kompressor bei Vorhandensein eines Leistungsüberschusses konstant bei niedriger Drehzahl weiterläuft, auch wenn sich eine Temperatur unter der gewählten Tieftemperatur einstellt.

2. Verfahren nach Anspruch 1, **dadurch gekennzeichnet, dass** die Temperatur im Tieftemperaturmodus mindestens -28° C ist.

3. Verfahren nach Anspruch 1, **dadurch gekennzeichnet, dass** der Modus zur Lagerung bei Temperaturen von mindestens -28° C (Tieftemperaturmodus) mittels eines Betätigungsmittels gewählt wird.

4. Verfahren nach Anspruch 1 oder 2, **dadurch gekennzeichnet, dass** der Kompressor bei gewähltem Tieftemperaturmodus durch eine Steuerungslogik im Dauerbetrieb immer bei der kleinsten möglichen Drehzahl betrieben wird.

5. Verfahren nach einem der Ansprüche 1 bis 4, **dadurch gekennzeichnet, dass** bei einer Temperaturänderung über eine Steuerungslogik die gewählte Tieftemperatur im Gerät wieder eingeregelt wird.

## Claims

1. A method for the storage of deep-frozen goods in a freezer having a speed-controlled compressor,
**characterized in that**
the compressor is operated in long-term operation; and
**in that** the temperature is lowered in a low-temperature mode to a temperature which is clearly below -18°C, and is kept substantially constant at a selected temperature with only low temperature fluctuations which are caused by a change in speed of the compressor,
**characterized in that**
the compressor runs on constantly at a low speed in the presence of an output excess, even if a temperature below the selected low temperature is adopted.

2. A method in accordance with claim 1, **characterized in that** the temperature in the low-temperature mode is at least -28°C.

3. A method in accordance with claim 1, **characterized in that** the mode for storage at temperatures of at least -28°C (low-temperature mode) is selected by means of an actuation means.

4. A method in accordance with either of claims 1 or 2, **characterized in that** the compressor is always operated at the lowest possible speed in long-term operation at the selected low-temperature mode by a logic control system.

5. A method in accordance with any one of claims 1 to 4, **characterized in that** the selected low temperature in the appliance is controlled again on a temperature change via a logic control system.

## Revendications

1. Procédé de stockage de produits surgelés dans un appareil de congélation doté d'un compresseur à vitesse variable,
**caractérisé**
**en ce que** le compresseur est exploité en fonctionnement continu ;
**en ce que** la température, dans un mode basse température, est réduite à une température qui est sensiblement inférieure à -18 °C, et est maintenue à une température sélectionnée sensiblement constante avec seulement de faibles variations de température, qui sont causées par une variation de vitesse du compresseur
**caractérisé en ce que**,
en présence d'un excédent de puissance, le compresseur continue à fonctionner à vitesse réduite de manière constante, même si une température inférieure à la basse température sélectionnée survient.

2. Procédé selon la revendication 1, **caractérisé en ce que** la température en mode basse température est au moins de -28 °C.

3. Procédé selon la revendication 1, **caractérisé en ce que** le mode pour le stockage à des températures d'au moins -28 °C (mode basse température) est sélectionné à l'aide d'un moyen d'actionnement.

4. Procédé selon la revendication 1 ou 2, **caractérisé en ce que**, lorsque le mode basse température est sélectionné, le compresseur est exploité par une logique de commande en fonctionnement continu toujours à la vitesse la plus faible possible.

5. Procédé selon l'une des revendications 1 à 4, **caractérisé en ce que**, en cas de variation de température, la basse température sélectionnée est de nouveau réglée dans l'appareil par une logique de commande.
